# EUROPEAN PATENT SPECIFICATION

(11) **EP 1 646 250 B1**
(45) Date of publication and mention of the grant of the patent: **03.10.2012**
(21) Application number: 04738181.9
(22) Date of filing: 28.05.2004
(51) Int. Cl.: H04W 28/18, H04L 1/18

(54) **THE TRIGGERING METHOD OF RADIO LINK LAYER TRANSMITTING WINDOW CONTROLLING INFORMATION**
AUSLÖSEVERFAHREN FÜR FUNKSTRECKENSCHICHT-SENDEFENSTER-STEUERINFORMATIONEN
METHODE DE DECLENCHEMENT DES INFORMATIONS DE COMMANDE DE LA FENETRE TRANSMISSION DE LA COUCHE DE LIAISON RADIO

(30) Priority: 30.05.2003 CN 03126735
(43) Date of publication of application: 12.04.2006
(73) Proprietor: ZTE Corporation, 518057 Shenzhen, Guangdong (CN)
(72) Inventor: WANG, Qian, c/o ZTE Corporation, Nanshan, Shenzhen, Guangdong 518057 (CN); DONG, Jia, ZTE Corpoartion, Nanshan, Shenzhen, Guangdong 518057 (CN); LI, Wei, ZTE Corpoartion, Nanshan, Shenzhen, Guangdong 518057 (CN)
(74) Representative: Schröer, Gernot H.
(86) International application number: PCT/CN2004/000558
(87) International publication number: WO 2004/107777

(56) References cited:
- EP-A- 1 315 341
- WO-A-01/93513
- CN-A- 1 367 964
- CN-A- 1 423 869
- CN-A- 1 496 157
- US-A1- 2002 004 389
- US-A1- 2002 097 809
- "3rd Generation Partnership Project; Technical Specification Group Radio Access Network; Radio Link Control (RLC) protocol specification (Release 5)", 3GPP STANDARD; 3GPP TS 25.322, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V5.3.0, 1 December 2002 (2002-12-01), pages 1-70, XP050367768,

## Description

### Technical Field

The present invention relates to radio link control in a cell mobile communication system and more particularly to a method for triggering control information of transmitting window in radio link control layer.

### Background of the Invention

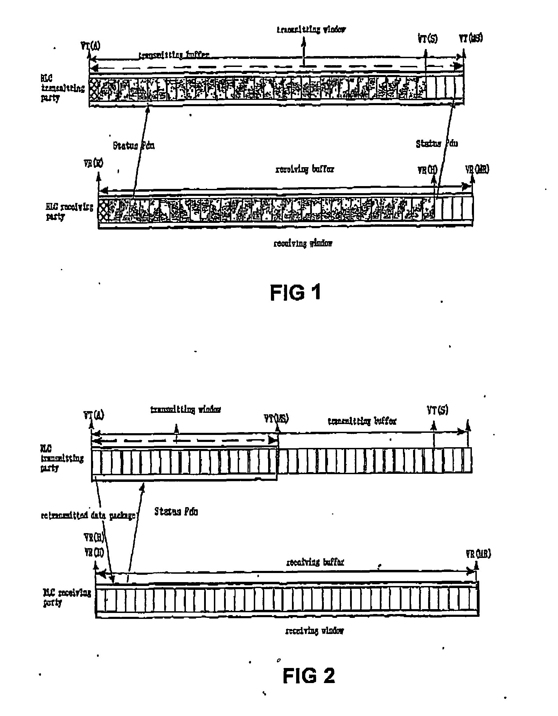

Radio Link Control (RLC) protocol is a control protocol based on sliding window, which is used for controlling the transmission of data package of radio link, as shown in Fig. 1. In a transmitting party of RLC, the block with cross-biases refers to the data package that is confirmed to have not been received by an opposing party and must be retransmitted, the blocks with shadow refer to the data package waiting to be confirmed by the opposing party, and the blank blocks refer to buffers that have not been used. In a receiving party of RLC, the block with cross-biases refers to the data package that has been lost during transmission by the opposing party and needs to be re-received, the blocks with shadow refer to data package that have been received, and the blank blocks refer to the buffer that have not been used.

Basic variables in RLC protocol are described in the following:
Configured_Tx_Window_Size: an initial value of transmitting window, which is configured to the RLC transmitting party by a upper protocol layer, and is also the largest size of transmitting window, with a unit presented by a number of Protocol Dada Units (PDU); and the RLC transmitting party applies for transmitting buffer according to this variable.
VT(S): a variable of transmitting status, which represents a serial number of next Protocol Dada Unit (PDU) that needs to be transmitted, not including a Protocol Dada Unit (PDU) re-transmitted.
VT(A): a variable of confirmation status, which represents a serial number of next sequential Protocol Dada Unit (PDU) that waits to be confirmed by the receiving party.
VT(MS): a variable of maximum transmitting status, if a serial number of a Protocol Dada Unit (PDU) exceeds or equal to this value, the Protocol Dada Unit is not allowed to transmit, and VT(MS)=VT(A)+VT(WS).
VT(WS): a size of transmitting window, its initial value, which is also the biggest value, is Configured_Tx_Window_Size, the least value is 1 or value configured by other upper layer, and VT(WS) varies in this scope.
Configured_Rx_Window_Size: a size of initial receiving window, which is configured to the RLC receiving party by a upper protocol layer, with a unit represented by a number of Protocol Dada Units (PDU); and RLC applies for receiving buffer according to this variable.
VR(R): a variable of receiving status, which represents a serial number of next sequential Protocol Dada Unit (PDU) to be received.
VR(H): a variable of receiving status with highest expectation, which represents a serial number of highest Protocol Dada Unit (PDU) expected to be received.
VR(MR): a variable of the biggest allowable receiving status, if a serial number of a Protocol Dada Unit (PDU) exceeds or equal to this value, the Protocol Dada Unit will be refused to receive by the RLC receiving party, and VR(MR)=VR(R)+Configured_Rx_Window_Size.

The RLC receiving party notifies the RLC transmitting party by a status package PDU (Status PDU) that some packages have been received and some packages have not been received. After receiving the status package PDU, the RLC transmitting party changes the value of the variable of confirmation status VT(A), and pushes forward the variable of maximum transmitting status VT(MS), to guarantee continuous transmission of data.

When the RLC transmitting party detects that a certain PDU has not been answered by the receiving party, such as the block with cross-biases in the RLC transmitting party in Fig. 1, the value of the variable of transmitting status VT(S) is caused to continuously increase until reaching the variable of maximum transmitting status VT(MS), and then a data with a serial number more than or equal to VT(MS) will be not transmitted.

When RLC receiving party detects that a certain PDU has not been received, such as the block with cross-biases in the RLC receiving party in Fig. 1, the value of a variable of receiving status with highest expectation VR(H) is caused to continuously increase until reaching the variable of the biggest allowable receiving status VR(MR), and then a data with a serial number more than or equal to VR(MR) will be not received.

In the current RLC protocol, it provides that: a RLC receiving party, based on state of its own receiving buffer, controls a size of window for a RLC transmitting party to transmit data, thereby controlling the use of bandwidth for the radio link. Its scheme is including a window size indication (Window Size SUFI) information in a status package PDU transmitted to the RLC transmitting party, and, after the RLC transmitting party receives the Window Size SUFI information, changing the size of transmitting window VT(WS) to WSN. If WSN equals to zero, the SUFI information is discarded; if WSN exceeds the largest size of transmitting window Configured_Tx_Window_Size, the size of transmitting window VT(WS) is set as Configured_Tx_Window_Size. When the radio link deteriorates, data may be lost, which results in an increase in buffer in the RLC receiving party. At this time, the RLC receiving party reduces the data transmission from the RLC transmitting party by Window Size SUFI information, and notifies the RLC transmission party to decrease the size of transmitting window VT(WS), thereby decreasing the transmitting window and avoiding the congestion of data. When the RLC receiving party detects that an available space of receiving buffer is continuously increasing up to certain thresholds, as shown in Fig. 2, all re-transmitted packages have been received, and the RLC receiving party has no buffer to use; in the same way, the RLC receiving party notifies the RLC transmitting party to increase the size of transmitting window VT(WS) so that the transmitting window is increased and the use efficiency of bandwidth in data link is avoided to decrease.

According to the actual measurement of different services, the lost probability of PDU in some none real time data services may be up to 10%. In good radio condition, a RLC protocol prescribes that the lost probability of PDU does not exceed 0.7%. Therefore, as compared, the lost probability of Window Size SUFI information is higher.

Window Size SUFI information is critical to the use of radio link bandwidth, but in the RLC protocol there is no protection mechanism for such critical information to ensure the RLC transmitting party being able to receive such information. Different triggering mechanisms of Window Size SUFI information make different impacts on the use efficiency of radio link bandwidth, and, moreover, there is no uniform criterion on the triggering of Window Size SUFI information in RLC protocol. US 2002/004389 A1 ((YI SEUNG JUNE [KR] ET AL), 10 January 2002), discloses a method for controlling data flow in communication system. Additionally, WO 01/93513A ((NOKIA MOBILE PHONE LTD., NOKIA INC.), 6 December 2001), discloses an apparatus, and associated method, for communicating packet data in a network including a radio-link. At present, a common triggering form in use is triggering in accordance with the comparative change ratio of the remaining space in receiving buffer and triggering in fixed period. After deciding that Window Size SUFI information is required to transmit, the receiving party only triggers once the transmission of Window Size SUFI information, and then it may take a long time for further triggering; and if the transmitting party has not received Window Size SUFI information, it does not adjust the size of window. Especially when the radio link is going from a deteriorated condition to a good condition, the Window Size SUFI information, in which the RLC receiving party requires the RLC transmitting party to increase the size of transmitting window, is only transmitted once, and, if such information is lost, the size of transmitting window is unable to be adjusted; especially while the condition in the radio link becomes good and the probability of package lost decreases, the RLC receiving party even does not trigger the Window Size SUFI information again, and, during this period, even if the radio link is good, the transmitting window may still remain a status under deteriorated radio link, so that data may be transmitted at a low rate in the radio link, thereby seriously decreasing the rate of the radio link.

### Summary of Invention

The present invention is to provide a method for triggering control information of transmitting window in radio link layer to efficiently overcome the disadvantage of prior art and solve such technical problems that the triggering mechanism of Window Size SUFI information does not work very well, and, when the Window Size SUFI information is lost, the Window Size SUFI information is unable to be further transmitted for adjusting the transmitting window, which leads to a decrease in use efficiency of bandwidth for the radio link control protocol.

The method of the present invention for triggering control information of transmitting window in radio link layer comprises:
Step 1: initializing a timer, a counter and a number for transmitting control information of transmitting window, Window Size SUFI, at a RLC receiving party;
Step 2: detecting periodically whether the control information of transmitting window is triggered at a RLC receiving party, if yes, performing step 3; if no, continuing detecting;
Step 3, detecting whether the counter has reached a transmission number for Window Size SUFI at a RLC receiving party, if yes, stopping timing on the timer, initializing the counter, and returning to step 2; if not, transmitting updated Window Size SUFI information, re-starting the timer, and adding one to the counter;
Step 4, detecting whether any new Window Size SUFI information needs to be transmitted during the timing of the timer at a RLC receiving party, if yes, initializing the counter, triggering Window Size SUFI information, and returning to step 2; if no, triggering Window Size SUFI information, and returning to step 2.

The present invention, through triggering Window Size SUFI information periodically by the RLC receiving party, enables a RLC transmitting party receive Window Size SUFI information consequently, which increases the reliability for transmitting Window Size SUFI and effectively overcomes defects in the triggering mechanism for Window Size SUFI in prior art. When the Window Size SUFI information is lost, Window Size SUFI information may be transmitted again in the present invention, the transmitting window can be adjusted in time, and, therefore, a decrease in the use efficiency of bandwidth for radio link control protocol is avoided.

### Brief Description of the Drawings

Fig. 1 is a schematic diagram of radio link control protocol;
Fig. 2 is a schematic diagram in which a RLC receiving party notifies a RLC transmitting party to change the size of transmitting window through a status package including Window Size SUFI information; and
Fig. 3 is a flow chart for a method of the present invention.

### Detailed Description of the Preferred Embodiment

The present invention will be further described in more details in the following in combination with the appended drawings.

The present invention adds a new timer Timer_Window_Periodic in a RLC receiving party for triggering Window Size SUFI information periodically, which avoids the problem of a decrease in use efficiency of bandwidth in current RLC protocol due to the loss of Window Size SUFI information.

After transmitting Window Size SUFI information, the RLC receiving party transmits Window Size SUFI information one time for each Timer_Window_Periodic period, and transmits the same Window Size SUFI information for N_window times repeatedly. In the RLC receiving party a counter V_window is also added for recording the number for transmitting Window Size SUFI information. After Window Size SUFI information has been transmitted for N_window times, the running of the timer Timer_Window_Periodic is terminated, the counter of V_window is restored to an initial value 0, and a new process is restarted. Triggering Window Size SUFI information is realized by setting triggering flag in the RLC receiving party.

If the transmission counter V_window for the Window Size SUFI information has not reached N_window and there is new Window Size SUFI information formed, transmitting of original Window Size SUFI information is immediately ceased, the timer Timer_Window_Periodic is re-started, and the counter V_window is restored as initial value 0. Thus a new process restarts.

If a reset process occurs in the RLC receiving party, the related variables in the RLC receiving party and transmitting party will be initialized, and the transmitting window of the RLC receiving party will be restored to the largest size. Therefore, it is not necessary to re-transmit Window Size SUFI information, but immediately terminate the operation of the timer Timer_Window_Periodic and restore the counter V_window to the initial value 0. Thus a new process restarts.

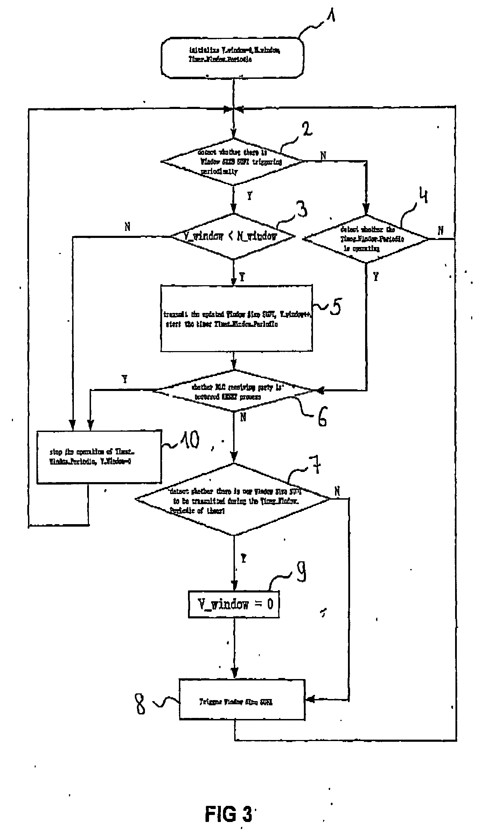

Detailed steps of the present invention are shown in Fig. 3.

Step 1: initializing in a RLC receiving party a timer Timer_Window_Periodic, a number for transmitting N_window, and a counter as zero; in which it should be noted that a timer Timer_Window_Periodic may be set a longer time to avoid further loss of Window Size SUFI information retransmitted within a short time after a loss of Window Size SUFI information due to worse radio condition, and the timer Timer_Window_Periodic is recommended to be set as 1000ms to 30000ms.

Step 2: detecting periodically whether Window Size SUFI information is triggered in the RLC receiving party, if yes, going to step 3; if no, going to step 4;

Step 3: comparing the number counted in the counter V_window and the number for transmitting N_window, if it satisfies a certain relationship, such as the number counted V_window being less than the number for transmitting N_window, going to step 5, otherwise going to step 10;

Step 4: detecting whether the timer Timer_Window_Periodic operates or not, if yes, going to step 6, otherwise going to step 2;

Step 5: transmitting newest Window Size SUFI information in the RLC receiving party, starting the timer Timer_Window_Periodic, adding 1 to the counter V_window;

Step 6: detecting whether a reset process occurs in the RLC receiving party, if yes, transferring to step 10, otherwise, transferring to step 7;

Step 7: detecting whether any new Window Size SUFI information needs to be transmitted during Timer_Window_Periodic of the timer, if yes, transferring to step 9, if not, transferring to step 8;

Step 8: triggering Window Size SUFI information, and transferring to step 2;

Step 9: setting the counter V_window as zero, and transferring to step 8; and

Step 10: terminating the operation of timer Timer_Window_Periodic, initializing the counter V_window as zero, and transferring to step 2.

It should be noted that, the embodiments described above are only intended to illustrate the technical solutions of the present invention, not limitation to the present invention.

## Claims

1. A method for triggering control information of transmitting window in a radio link layer, characterized that the method comprises steps of:
Step 1: initializing a timer, a counter and a number for transmitting control information of transmitting window in a radio link control receiving party (1);
Step 2: detecting periodically whether transmitting window control information is triggered in the radio link control receiving party (2), if yes, performing step 3; if no, going on detecting;
Step 3: detecting whether the counter reaches the number for transmitting control information of transmitting window in the radio link control receiving party (3),
if yes, stopping the timing of the timer, initializing the counter (10), and returning to step 2; if not, transmitting updated control Information of transmitting window, re-starting the timer, and adding one to the counter (5);
Step 4, detecting whether a reset process occurs in the radio link control receiving party (6), if yes, stopping the operation of the timer, initializing the counter (10), and returning to step 2; if not, detecting whether new control information of transmitting window needs to be transmitted during the timing of the timer in the radio link control receiving party (7), if yes, initializing the counter (9), triggering control information of transmitting window (8), and returning to step 2; if not, triggering control information of transmitting window (8), and returning to step 2;
wherein the control information includes window size indication information.

2. The method for triggering control information of transmitting window in a radio link layer of claim 1, characterized that the triggering of the transmitting window control information is realized by setting triggering flag in the radio link control receiving party.

3. The method for triggering control information of transmitting window in a radio link layer of claim 1 or 2, characterized that the period of the timer is set to 1000ms-30000ms.

## Patentansprüche

1. Verfahren zum Auslösen von Steuerinformationen eines Sendefensters in einer Funkstreckenschicht, **dadurch gekennzeichnet, dass** das Verfahren die folgenden Schritte aufweist:
Schritt 1: Initialisieren eines Zeitgebers, eines Zählers und einer Zahl zum Übertragen von Steuerinformationen eines Sendefensters bei einem Steuerinformationen empfangenden Teilnehmer (1) einer Funkstrecke;
Schritt 2: periodisches Erfassen, ob die Steuerinformationen des Sendefensters bei dem die Steuerinformationen empfangenden Teilnehmer einer Funkstrecke ausgelöst werden (2); wenn Ja: Ausführen von Schritt 3; wenn Nein: Weiterarbeiten mit der Erfassung;
Schritt 3: Erfassen, ob der Zähler die Zahl zur Übertragung von Steuerinformationen des Sendefensters bei dem die Steuerinformationen empfangenden Teilnehmer der Funkstrecke erreicht (3),
wenn Ja: Anhalten der Zeltzählung des Zeitgebers, Initialisieren des Zählers (10) und Zurückschalten zu Schritt 2; wenn Nein: Übertragen aktualisierter Steuerinformationen des Sendefensters, Neustart des Zeitgebers und Addieren von Eins zum Zähler (5);
Schritt 4: Erfassen, ob bei dem die Steuerinformationen empfangenden Teilnehmer der Funkstrecke ein Rücksetzvorgang auftritt (6); wenn Ja: Anhalten des Betriebs des Zeitgebers, Initialisieren des Zählers (10) und Zurückschalten zu Schritt 2; wenn Nein: Erfassen, ob neuer Steuerinformationen des Sendefensters während des Zeitablaufs des Zeitgebers bei dem die Steuerinformationen empfangenden Teilnehmer der Funkstrecke übertragen werden müssen (7); wenn Ja: Initialisieren des Zählers (9), Auslösen der Steuerinformationen des Sendefensters (8) und Zurückschalten zu Schritt 2; wenn Nein: Auslösen von Steuerinformationen des Sendefensters (8) und Zurückschalten zu Schritt 2;
wobei die Steuerinformationen Informationen zur Angabe der Fenstergröße beinhalten.

2. Verfahren zum Auslösen von Steuerinformationen eines Sendefensters in einer Funkstreckenschicht nach Anspruch 1, **dadurch gekennzeichnet, dass** die Auslösung der Steuerinformationen des Sendefensters durch Setzen einer Auslösemarke bei dem die Steuerinformationen empfangenden Teilnehmer der Funkstrecke erfolgt.

3. Verfahren zum Auslösen von Steuerinformationen eines Sendefensters in einer Funkstreckenschicht nach Anspruch 1, **dadurch gekennzeichnet, dass** der Zeitraum des Zeitgebers auf 1000 ms - 30000 ms eingestellt wird.

## Revendications

1. Procédé pour déclencher des informations de commande de la fenêtre de transmission dans une couche de liaison radio, **caractérisé en ce que** le procédé comprend les étapes de:
Etape 1: initialiser une horloge, un compteur et un nombre pour la transmission de l'information de commande de la fenêtre de transmission dans une partie de réception de commande de liaison radio (1);
Etape 2: détecter périodiquement si l'information de commande de fenêtre de transmission est déclenchée dans la partie de réception de commande de liaison radio (2), si oui, exécuter l'étape 3; si non, aller à détection;
Etape 3: détecter si le compteur atteint le nombre pour la transmission des informations de commande de la fenêtre de transmission dans la partie de réception de commande de liaison radio (3),
si oui, arrêter la synchronisation de l'horloge, initialiser le compteur (10) et revenir à l'étape 2; si non, transmettre l'information de commande mise à jour de la fenêtre de transmission, redémarrer l'horloge et ajouter un au compteur (5);
Etape 4: détecter si le processus de remise à l'état initial se produit dans la partie de réception de commande de liaison radio (6), si oui, arrêter le fonctionnement de l'horloge, initialiser le compteur (10) et revenir à l'étape 2; si non détecter si la nouvelle information de commande de la fenêtre de transmission doit être transmise durant la synchronisation de l'horloge dans la partie de réception de commande de liaison radio (7), si oui, initialiser le compteur (9), déclencher l'information de commande de la fenêtre de transmission (8) et revenir à l'étape 2; si non, déclencher l'information de commande de la fenêtre de transmission (8) et revenir à l'étape 2;
où l'information de commande comprend l'information de l'indication de la dimension de la fenêtre.

2. Procédé de déclenchement des informations de commande de la fenêtre de transmission dans une couche de liaison radio de la revendication 1, **caractérisé en ce que** le déclenchement des informations de commande de la fenêtre de transmission est réalisé en établissant le marqueur de déclenchement dans la partie de réception de commande de la liaison radio.

3. Procédé de déclenchement des informations de commande de la fenêtre de transmission dans une couche de liaison radio selon la revendication 1 ou 2, **caractérisé en ce que** la période de l'horloge est réglée à 1000ms-30000ms.
